# EUROPÄISCHE PATENTSCHRIFT

(11) **EP 3 253 549 B1**
(45) Veröffentlichungstag und Bekanntmachung des Hinweises auf die Patenterteilung: **18.08.2021**
(21) Anmeldenummer: 16701023.0
(22) Anmeldetag: 20.01.2016
(51) Int. Cl.: B29C 45/16, B29C 45/42, B29C 45/76

(54) **SPRITZGIESSVORRICHTUNG ZUM HERSTELLEN VON TEILEN AUS KUNSTSTOFF**
INJECTION MOLDING APPARATUS FOR MANUFACTURING PLASTIC PARTS
APPAREIL DE MOULAGE POUR FABRIQUER DES PIÈCES EN MATIÈRE PLASTIQUE

(30) Priorität: 05.02.2015 CH 1502015
(43) Veröffentlichungstag der Anmeldung: 13.12.2017
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2016/051048
(87) Internationale Veröffentlichungsnummer: WO 2016/124396

(56) Entgegenhaltungen:
- WO-A1-2010/128072
- WO-A2-2009/080827
- CH-A2- 705 721
- US-A- 6 143 225
- US-A1- 2008 258 353

## Beschreibung

Die Erfindung betrifft eine Vorrichtung zum Herstellen von Teilen aus mehreren Kunststoffkomponenten, insbesondere mehrlagige Vorformlinge (Preforms), sowie eine Handlungsvorrichtung für diese.

Aus dem Stand der Technik sind Spritzgiessvorrichtungen zum Herstellen von ein- und mehrlagigen Vorformlingen, sowie Kühlvorrichtungen zum Kühlen derselben bekannt. Da die Vorformlinge einerseits dickwandig sind und daher vergleichsweise lange benötigen, bis sie soweit abgekühlt sind und andererseits in gewissen Bereichen eine hohe Masshaltigkeit gefordert wird, werden spezielle Kühl- und Handlungsvorrichtungen eingesetzt, um die Vorformlinge aus einer Spritzgiessvorrichtung definiert abzukühlen.

US4836767 wurde 1989 im Namen der Fa. Husky publiziert. US'767 befasst sich mit einer Vorrichtung welche zum gleichzeitigen Herstellen und Abkühlen von Kunststoffteilen dient. Eine Trägerplatte, welche Teil der Spritzgiessform ist, ist um eine parallel zur Maschinenlängsachse drehbare Drehachse drehbar angeordnet. Sie dient zur Entnahme der Teile aus der Spritzgiessvorrichtung und zur Übergabe derselben an eine würfelförmige Kühlvorrichtung, welche um eine horizontale Drehachse drehbar ist. Die hergestellten Teile werden von der Kühlvorrichtung an ein Förderband übergeben, welches unterhalb der Kühlvorrichtung angeordnet ist.

EP0592021 wurde 1994 im Namen der Inter Tooling Services BV publiziert. EP'021 befasst sich mit einer Spritzgiessvorrichtung, sowie einer Ausgabeeinrichtung und einer Robotereinrichtung. Die Ausgabevorrichtung umfasst einen sogenannten Revolverkopf an welchem Aufnahmeplatten angeschlossen sind. Diese dienen zur Aufnahme der gespritzten Teile. Sobald eine Aufnahmeplatte der Robotereinrichtung mit neu gegossenen Produkten gefüllt ist, macht die Platte eine Linearbewegung aus der Position zwischen den Formhälften zu der Ruheposition. Ein Problem besteht darin, dass die gesamte Ausgabevorrichtung in die Spritzgiessform einfährt, was ein hohes Risiko von Beschädigungen beinhaltet.

US6143225A wurde 2000 im Namen von Husky Injection Molding veröffentlicht. Die US'225 betrifft eine Vorrichtung zum Entladen und Kühlen von Formteilen aus einer Spritzgießmaschine mit einem um eine zentrale Achse drehbaren Indexrevolverblock. Die Vorrichtung umfasst einen Kühlrevolverblock, der um eine zur Mittelachse im Wesentlichen parallele Achse drehbar ist, wobei der Kühlrevolverblock eine Vielzahl von Flächen aufweist. Mindestens eine der Flächen enthält eine Vielzahl von Düsen zum Aufbringen eines Kühlfluids auf die Oberflächen der Formteile, während sich die Formteile auf dem Indexrevolverblock befinden. Mindestens zwei der anderen Flächen des Kühlrevolverblocks enthalten eine Mehrzahl von Aufnahmeröhren zur Aufnahme von Formteilen aus dem Indexrevolverblock zur weiteren Kühlung.

US2008258353A1 wurde 2000 im Namen von Said K Farha, Heinrich Feichtinger, Gerald Hutchinson und Prasad Joshi veröffentlicht. Die US'353 betrifft ein Formwerkzeugsystem, das einen Würfel, der so konfiguriert ist, dass er sich um eine Achse dreht, eine erste Formnestplatte, die mindestens einen ersten Formnestabschnitt umfasst. Ferner umfasst das Formwerkzeugsystem eine zweite Formnestplatte, die mindestens einen zweiten Formnestabschnitt, einen Fluidkanal, der in mindestens einem der Dorne angeordnet ist, und ein hydraulisches Verbindungselement umfasst, das so konfiguriert ist, dass es mindestens einen der Fluidkanäle mit einem Einlass und/oder einem Auslass verbindet, die außerhalb des Würfels angeordnet sind. Der Würfel umfasst mindestens zwei Seiten, wobei jede Seite mindestens einen Dorn umfasst.

WO2009080827A2 wurde 2009 im Namen von Rainer Armbruster und der Foboha GmbH publiziert. Die WO'827 betrifft eine Spritzgiessvorrichtung mit einer ersten, einer gegenüber diesen beweglich angeordneten zweiten Formhälfte und einer zwischen diesen angeordneten um eine Drehachse drehbaren mittleren Formhälfte. Seitlich zur mittleren Formhälfte ist eine weitere Bearbeitungsvorrichtung angeordnet.

WO2010128072A1 wurde 2010 im Namen von Rainer Armbruster und der Foboha GmbH veröffentlicht. Die WO'072 betrifft eine Vorrichtung zum Herstellen von Scharnierverschlüssen aus Kunststoff. Die Vorrichtung weist einen um eine Drehachse drehbaren prismatischen Mittelblock auf, der zwischen einer ersten und einer zweiten Formplatte angeordnet ist. Die erste und die zweite Formplatte sind gegenüber dem Mittelblock in einer ersten Richtung verfahrbar und bilden in Schliessstellung im Bereich einer ersten und einer zweiten Trennebene eine Mehrzahl von Kavitäten. Die Vorrichtung weist ein Handlingsystem auf, welches zur layoutgerechten Entnahme und Überführung der Scharnierverschlüsse an eine Verdeckelungsvorrichtung dient.

CH705721A2 wurde 2013 im Namen der Foboha GmbH publiziert. Die CH'721 betrifft eine Spritzgiessvorrichtung zum Herstellen von Teilen aus Kunststoff mit einem um eine Drehachse drehbaren Mittelteil, welcher zwischen einer ersten und einer zweiten Formhälfte angeordnet ist, die relativ zum Mittelteil in einer Längsrichtung der Spritzgiessvorrichtung senkrecht zur Drehachse linear verschiebbar sind und wobei der Mittelteil vier zur Drehachse periphere Seitenflächen aufweist, die je erste und zweite Kavitätenhälften aufweisen, wobei in einer Schliessstellung der Spritzgiessvorrichtung die ersten Kavitätenhälften mit Bezug auf eine Drehrichtung des Mittelteils in einer 0°-Position mit zu diesen komplementär ausgestalteten dritten Kavitätenhälften der ersten Formhälfte erste Formhohlräume bilden, welche zum Spritzgiessen von ersten Teilen dienen, und die zweiten Kavitätenhälften mit Bezug auf die Drehrichtung des Mittelteils in einer 180°-Position mit zu diesen komplementär ausgestalteten vierten Kavitätenhälften der zweiten Formhälfte zweite Formhohlräume bilden, welche zur Herstellung von zweiten Teilen dienen, und zumindest die zweite Formhälfte Aussparungen zur temporären Aufnahme von im Bereich der ersten Kavitätenhälften am Mittelteil haftenden in den ersten Formhohlräumen hergestellten ersten Teilen dienen.

DE102014205442A1 wurde 2014 im Namen der Otto Männer Innovation GmbH veröffentlicht. DE'442 betrifft eine Vorrichtung zum Temperieren des Halsabschlussbereichs von Preforms. Die Vorrichtung umfasst Temperiereinsätze, welche bezüglich der Gestalt dem mit einem Gewinde versehenen Halsabschluss der Vorformlinge entsprechen. Die Temperiereinsätze sind mit einer Entnahmeplatte, einem Entnahmerahmen oder einer ähnlichen Fördereinrichtung gekoppelt, die frisch gegossene Vorformlinge mittelbar oder unmittelbar von den Spritzgiesskernen aufnimmt, die zum Herstellen der Vorformlinge verwendet werden. Die Temperiereinsätze können den Halsabschluss kühlen oder heizen. Diese Temperiereinsätze sind mit Kühlrohren oder mit Kühlkernen verbunden, welche ausserhalb der Spritzgiessformkavitäten angeordnet sind und zum Kühlen des restlichen Bereichs des Vorformlings dienen, der kein Gewinde aufweist. Die Temperiereinsätze können mit einem Auswerfmechanismus verbunden sein.

DE102006007639A1 wurde 2007 im Namen der MH Mold & Hotrunner Technology AG publiziert. DE'639 befasst sich mit einem System zur Nachbehandlung von Vorformlingen. Das System weist Aufnahmefinger auf, welche in die Vorformlinge eingreifen können. Die Aufnahmefinger sind an den Seiten eines Würfels befestigt, der um eine Achse drehbar angeordnet ist. Die Vorformlinge werden mittels einer seitlich in eine Spritzgiessform einfahrenden Entnahmeplatte an die Aufnahmefinger übergeben. Ein Problem besteht darin, dass das System einen vergleichsweise komplexen Aufbau aufweist.

Eine Aufgabe der Erfindung besteht darin eine Vorrichtung zum Herstellen von Teilen aus Kunststoff zu zeigen, welche einen im Vergleich zum Stand der Technik einfacheren und effizienteren Aufbau aufweist. Diese Aufgabe wird durch die in den Patentansprüchen definierte Erfindung gelöst.

In einer Ausführungsform umfasst die Erfindung eine Spritzgiessvorrichtung zur Herstellung von Kunststoffteilen aus einer oder mehreren Materialkomponenten. Die Spritzgiessvorrichtung weist eine Spritzgiessform mit einem um eine erste Drehachse drehbaren Mittelteil auf, welches zwischen einer ersten und einer zweiten Formhälfte angeordnet und relativ zu diesen in einer ersten Richtung verschiebbar ist. Das Mittelteil weist zumindest ein Paar bezüglich der ersten Drehachse einander gegenüberliegende Seitenflächen auf, welche in einer Schliessstellung mit der ersten und der zweiten Formhälfte Kavitäten bildet. Eine Haltevorrichtung dient zur Halterung des Mittelteils gegenüber der ersten und der zweiten Formhälfte. Weiterhin ist eine Transfervorrichtung vorhanden, welche zumindest in einer Offenstellung seitlich neben dem Mittelteil angeordnet ist und zur Übernahme von einer in dieser Position zugewendeten Seitenfläche des Mittelteils haftenden Kunststoffteilen dient. Die Transfervorrichtung ist mit Vorteil an der Haltevorrichtung des Mittelteils befestigt. Sie weist in der Regel eine bezüglich der Haltevorrichtung verschiebbare Basis, sowie ein gegenüber der Basis um eine zweite Achse drehbares Speichermittel auf. Die erste und die zweite Drehachse sind mit Vorteil parallel zueinander angeordnet. Je nach Ausführungsform können sie jedoch auch in einem rechten Winkel zueinander angeordnet sein. In die Kavitäten der Spritzgiessvorrichtung wird in Schliessstellung flüssiger Kunststoff zur Herstellung der Teile in mehreren Schritten/Lagen eingespritzt. Z.B. werden Teilbereiche der herzustellenden Kunststoffteile in den Kavitäten zwischen dem Mittelteil und der ersten Formhälfte hergestellt. Anschliessend wird die Spritzgiessform durch relatives Verschieben der ersten und der zweiten Formhälfte bezüglich dem Mittelteil geöffnet und das Mittelteil dann mit den daran anhaftenden Teilbereichen um die erste Drehachse gedreht, bis die Teilbereiche zwischen dem Mittelteil und der zweiten Formhälfte angeordnet sind. Anschliessend wir die Spritzgiessform wieder geschlossen und dieselbe oder eine zweite Materialkomponente auf den ersten Teilbereich aufgespritzt. Anschliessend wird die Spritzgiessform wieder geöffnet und der Mittelteil um weitere 90° gedreht, so dass die Teile gegenüber der Transfervorrichtung zu liegen kommen, von der sie übernommen werden.

Das Speichermittel dient zur Übernahme und Speicherung von Kunststoffteilen aus den Kavitäten des Mittelteils. Je nach Ausgestaltung und Anwendungsgebiet werden die entnommenen Kunststoffteile im Speichermittel einem weiteren Verarbeitungsschritt unterzogen und dann ausgeworfen und/oder wieder an den Mittelteil der Spritzgiessform übergeben. Z.B. werden die Kunststoffteile gekühlt und/oder einer (optischen) Kontrolle, bzw. einem Test (z.B. einem Test auf Dichtigkeit) unterzogen. Die Transfervorrichtung ist mit Vorteil über ein Stativ an der Haltevorrichtung des Mittelteils befestigt. Andere Befestigungsarten sind möglich. In einer bevorzugten Ausführungsform ist die Transfervorrichtung an einer oberen Traverse der Haltevorrichtung des Mittelteils befestigt. Weitere Aspekte der Haltevorrichtung können der nachfolgenden Beschreibung der Ausführungsbeispiele entnommen werden. Die Haltemittel sind auf dem Umfang des Speichermittels verteilt angeordnet, welches in der Regel um eine zweite Achse drehbar angeordnet ist. Die Anordnung der Haltemittel entspricht zumindest der Anordnung der Kavitäten einer Seitenfläche des Mittelteils, so dass die Kunststoffteile entnommen werden können. In einer bevorzugten Ausführungsform ist das Speichermittel unterhalb der Basis angeordnet. Dies hat den Vorteil, dass die Kunststoffteile ungehindert nach unten aus der Vorrichtung herausfallen können. In einer Ausführungsform weist das Speichermittel glockenförmige Haltemittel auf, welche zur Aufnahme der Kunststoffteile dienen. Sie weisen zu diesem Zweck den Kunststoffteilen entsprechende Hohlräume auf. Zum Kühlen oder Erwärmen können die Haltemittel Kanäle aufweisen, durch welche entsprechend temperierte Flüssigkeiten geleitet werden können. Die Haltemittel können eine Öffnung zum Anlegen eines Unterdrucks und/oder eines Überdrucks aufweisen, so dass die Kunststoffteile in den Haltemitteln haften oder aus diesen ausgestossen werden können. In einer bevorzugten Ausführungsform sind auf der dem Mittelteil gegenüberliegenden Seite des Speichermittels Greifer angeordnet, welche zum Ergreifen von am Speichermittel haftenden Kunststoffteilen geeignet sind. Die Greifer können ebenfalls am Stativ befestigt sein. Alternativ oder in Er-gänzung können die Greifer an einer externen, ortsfesten Vorrichtung befestigt werden. Ein Nachteil besteht darin, dass diese nicht einfach mit dem Mittelteil mitbewegt werden können. Die Greifer können zum kontrollierten Auswerfen der Kunststoffteile aus der Spritzgiessvorrichtung dienen. Im Bereich der Haltemittel, d.h. ausserhalb und/oder innerhalb der Haltemittel, können Sensoren angeordnet werden, welche zur Überprüfung der Kunststoffteile dienen. Anstelle der Entnahme durch die Greifer können die hergestellten Kunststoffteile auch an eine weitere Vorrichtung, z.B. eine weitere Spritzgiessvorrichtung übergeben werden.

Anhand der in den nachfolgenden Figuren gezeigten Ausführungsbeispiele und der dazugehörigen Beschreibung werden Aspekte der Erfindung näher erläutert. Es zeigen:
- Fig. 1: eine Ausführungsform der Erfindung in einer perspektivischen Darstellung von schräg vorne und oben;
- Fig. 2: die Ausführungsform gemäss Figur 1 in einer perspektivischen Darstellung von schräg vorne und unten;
- Fig. 3: die Ausführungsform gemäss Figur 1 auf wesentliche Teile begrenzt in einer perspektivischen Darstellung von schräg vorne und oben;
- Fig. 4: die Ausführungsform gemäss Figur 3 in einer perspektivischen Darstellung von schräg vorne und unten;
- Fig. 5: ein Kunststoffteil, sowie eine Haltemittel für ein solches.

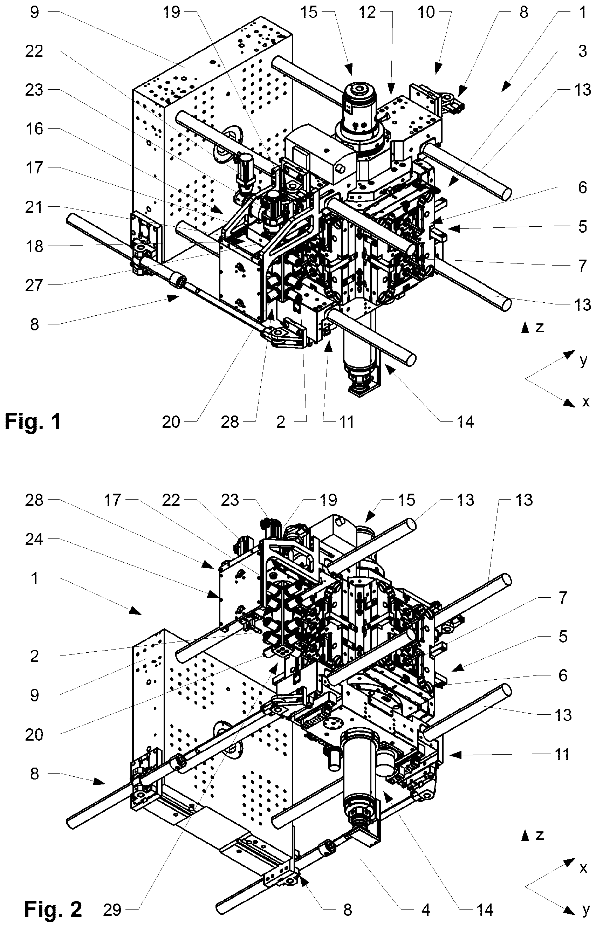

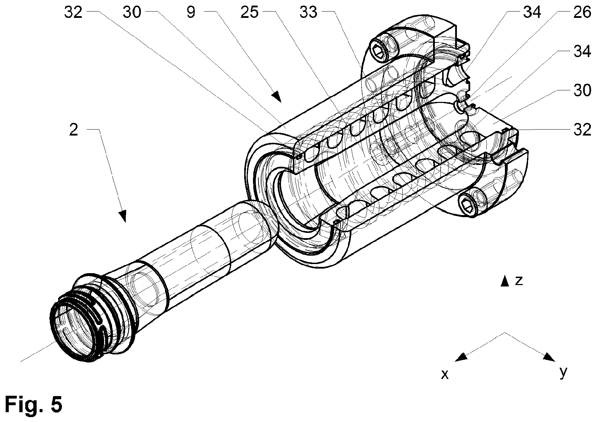

**Figur 1** zeigt eine Ausführungsform einer Vorrichtung 1 zur Herstellung von Kunststoffteilen 2 (vgl. **Figur 5**) aus einer oder mehreren Materialkomponenten. Die herzustellenden Kunststoffteile 2 können z.B. ein- oder mehrlagig aufgebaut werden. Beim gezeigten Ausführungsbeispiel dient die Vorrichtung 1 zur Herstellung von Vorformlingen 2, auch Preforms genannt, zur Herstellung von PET-Flaschen durch Blasformen.

Die Vorrichtung 1 weist eine Spritzgiessform 3 auf, welche hier nur teilweise dargstellt ist. Die Spritzgiessform 3 weist ein um eine erste Drehachse 4 drehbaren Mittelteil 5 auf, welcher zwischen einer ersten und einer zweiten Formhälfte (nicht im Detail dargestellt) angeordnet ist und zumindest ein Paar bezüglich der ersten Drehachse 4 des Mittelteils 5 einander gegenüberliegende Seitenflächen 6 aufweist. In der gezeigten Ausführungsform weist der Mittelteil 5 vier Seitenflächen 6 auf, wobei je zwei einander gegenüberliegende Seitenflächen 6 einander zugeordnet sind. Die Seitenflächen 6 bilden in einer Schliessstellung (nicht dargestellt) mit der ersten und der zweiten Formhälfte erste und zweite Formhohlräume, bzw. Kavitäten 7, welche durch Aufnahme von geschmolzenem Kunststoff zur Ausformung der Kunststoffteile 2 in einem oder mehreren Schritten geeignet sind. Die Düsenseite der Spritzgiessform 3 befindet sich normaler Weise in der ersten, bzw. der zweiten, aussenliegenden Formhälften. Am Mittelteil 5 sind die sogenannten Kernseiten angeordnet.

In der gezeigten Ausführungsform ist der Mittelteil 5 an einer Haltevorrichtung 10 befestigt, welche eine untere und eine obere Traverse 11, 12 aufweist, die an den Holmen 13 einer Spritzgiessmaschine (nicht im Detail dargestellt), linear entlang diesen in einer ersten Richtung verschiebbar gelagert ist. Damit beim Öffnen und Schliessen der Spritzgiessform 3 der Mittelteil 5 mittig zwischen der ersten und der zweiten Formhälfte angeordnet bleibt, ist ein hier hydraulischer Linearantrieb 8 vorgesehen (je nach Anwendungsgebiet und Ausgestaltung sind andere Antriebe möglich), welcher den Mittelteil 5, bzw. dessen Haltevorrichtung 10 mit einer oder beiden Formaufspannplatten 9 wirkverbindet. Der Linearantrieb 8 bewirkt, dass der Mittelteil 5 beim Öffnen und beim Schliessen zumindest in der voll geöffneten Position mittig zwischen der ersten und der zweiten Formhälfte (nicht näher dargestellt) angeordnet ist, so dass der Mittelteil 5 um die erste Drehachse 4 konfliktfrei gedreht werden kann. In der gezeigten Ausführungsform handelt es sich beim Linearantrieb 8 um insgesamt vier Hydraulikzylinder 9, von denen jedoch nur die unteren beiden in den **Figuren 1** und **2** dargestellt sind. Je nach Anwendungsgebiet kann die Haltevorrichtung 10 nur aus der unteren oder nur aus der oberen Traverse 11, 12 oder aus einer Kombination bestehen. Alternativ oder in Ergänzung kann die untere Traverse 11 auf einem Maschinenbett (ebenfalls nicht weiter dargestellt) der Spritzgiessmaschine gelagert sein. In diesem Fall ist eine Anbindung an den Holmen 13 nicht zwingend erforderlich. Die Traversen 11, 12 weisen je eine (untere, bzw. obere) Dreheinheit 14, 15 auf, zwischen denen der Mittelteil 5 um die erste Drehachse 4 drehbar angeordnet ist.

In der gezeigten Ausführungsform ist eine Transfervorrichtung 16 an der oberen Traverse 12 befestigt. Alternativ oder in Ergänzung kann die Transfervorrichtung 16 auch an der unteren Traverse 11 oder an einer externen Haltevorrichtung (bezüglich der Maschinenlängsachse ortsfest) angeordnet sein. Die Transfervorrichtung 16 umfasst ein Stativ 17, sowie ein an diesem befestigtes Transfermodul 18, welches gegenüber dem Stativ 17, bzw. dem Mittelteil 5 in transversaler Richtung (y-Richtung) linear verschiebbar ist. Das Transfermodul 18 weist eine Basis 27 und ein bezüglich dieser um eine zweite Drehachse 19 drehbar angeordnetes Speichermittel 28 auf. Dieses weist auf dem Umfang verteilte Haltemittel 20 auf, die zur temporären Aufnahme und Halterung der Kunststoffteile 2 vom Mittelteil 5 dienen. In der gezeigten Ausführungsform ist das Speichermittel 28 unterhalb der Basis 27 hängend angeordnet. Zur Übergabe von Medien, wie Wasser und/oder Luft und/oder Öl, zwischen der Basis 27 und dem Speichermittel 28 können mit Vorteil im Innern der Basis koaxiale Kanäle (nicht näher dargestellt) angebracht sein, welche zum Austausch der Medien zwischen der drehfest angebrachten Basis und dem rotierend angeordneten Speichermittel 28 dienen. Die Verschiebbarkeit zwischen dem Stativ 17 und dem Transfermodul 18 wird durch Linearführungsmittel 21 gewährleistet. Ein erster Antrieb 22 bildet eine Wirkverbindung zwischen dem Stativ 17 und der Basis 27 und dient zum Verschieben der Transfervorrichtung 16 gegenüber dem Stativ 17, bzw. relativ zum Mittelteil 5 der Spritzgiessform 3. Ein zweiter Antrieb 23 bildet eine Wirkverbindung zwischen der Basis 27 und dem Speichermittel 28 und dient zum Drehen des Speichermittels 28 gegenüber der Basis 27 um die zweite Drehachse 19. Die Haltemittel 20 dienen zur Übernahme, bzw. temporären Halterung der Kunststoffteile 2. Die Kunststoffteile 2 werden aus den Kavitäten 7 einer ihnen zugewendeten Seitenfläche 6 des Mittelteils 5 übernommen. Bei Bedarf können die Kunststoffteile 2, vor der Übernahme durch die im entsprechenden Verarbeitungsschritt zugewendeten Haltemittel 20 des Transfermoduls 18 durch eine Freistellmechanik (nicht näher dargestellt), welche normaler Weise im Innern des Mittelteils 5 angeordnet ist, zur reibungslosen Übernahme freigestellt werden.

Auf der dem Mittelteil 5 gegenüberliegenden Seite des Transfermoduls 18 sind Greifer 24 angeordnet, welche in einem weiteren Verarbeitungsschritt zur Übernahme der Kunststoffteile 2 von den Haltemitteln 20 des Transfermoduls 18 dienen. Die Greifer 24 sind in der gezeigten Ausführungsvariante ebenfalls am Stativ 17 befestigt, können aber bei Bedarf auch extern, z.B. an der Spritzgiessmaschine oder ausserhalb derselben stationär, befestigt werden. Zur Übernahme wird das Transfermodul 18 mit den daran haftenden Kunststoffteile 2 entlang der Linearführungsmittel 21 bis in den Wirkbereich der Greifer 24 bewegt, so dass die Greifer 24 die Kunststoffteile 2 erfassen und so von dem Transfermodul 18 übernehmen können. In der gezeigten Ausführungsvariante werden die Greifer 24 anschliessend geöffnet, so dass die Kunststoffteile 2 nach unten aus der Vorrichtung 1 herausfallen.

Das Transfermodul 18 weist in der gezeigten Ausführungsvariante eine der Anzahl Kavitäten 7 des Mittelteils 5 entsprechende Anzahl Haltemittel 20 auf. Je nach Anwendungsgebiet kann die Anzahl jedoch höher oder tiefer sein, sofern pro zugewendete Seite die Anzahl korrespondiert. Z.B. kann der Mittelteil 5 vier Seitenflächen 6 mit Kavitäten aufweisen, wobei das Speichermittel 28 nur zwei Seiten mit Haltemitteln 20 aufweist. In diesem Fall ist es erforderlich, dass das Speichermittel 20 im Vergleich zum Mittelteil 5 doppelt so schnell um die zweite Drehachse 19 dreht als dieses um die erste Drehachse 4. Andererseits kann der Mittelteil 5 auch nur auf zwei Seitenflächen 6 mit Kavitäten 7 bestückt sein und das Speichermittel 28 aber auf vier Seiten. In diesem Fall dreht das Speichermittel 28 entsprechend langsamer. Andere Anordnung sind je nach Bedarf möglich.

Während dem die Kunststoffteile 2 durch die Haltemittel 20 des Speichermittels 28 gehalten werden, können sie einem weiteren Verarbeitungsschritt unterzogen werden. In der gezeigten Ausführungsform dienen die Haltemittel 9 zur Kühlung der Kunststoffteile 2. Dies hat den Vorteil, dass selbst dickwandige Kunststoffteile 2, welche eine lange Abkühlzeit haben, im Vergleich zum Stand der Technik früh vom Mittelteil 5 übernommen werden können, ohne dass die Produktionsgeschwindigkeit der Spritzgiessform 3 nachteilhaft gedrosselt werden muss. Indem die Transfervorrichtung 16 seitlich neben dem Mittelteil 5 angeordnet und mit diesem entlang der Holmen 13 mitbewegt wird, ist die Übergabe der Kunststoffteile 2 vom Mittelteil 5 an die Transfervorrichtung 16 nicht an eine bestimmte Längsposition des Mittelteils 5 gebunden und kann damit im Prinzip jederzeit erfolgen.

Um die Kunststoffteile 2 effizient und schonend kühlen zu können, weisen die Haltemittel 20 eine vorzugsweise glockenförmige Ausgestaltung mit einem Hohlraum 25 auf, so dass die Kunststoffteile 2 im Innern aufgenommen werden können. Durch die glockenförmige Ausgestaltung wird eine möglichst grosse Berührungsfläche erzielt, welche im Vergleich zum Stand der Technik eine besonders effiziente Kühlung gewährleistet. Ein Vorteil der erfindungsgemässen Vorrichtung besteht darin, dass sie einen vergleichsweise geringe Grösse aufweist und damit nur wenig Stellfläche beansprucht. Weiterhin ist sie robust und Wartungsarm im Betrieb. Weitere Details gehen aus der nachfolgenden Beschreibung hervor.

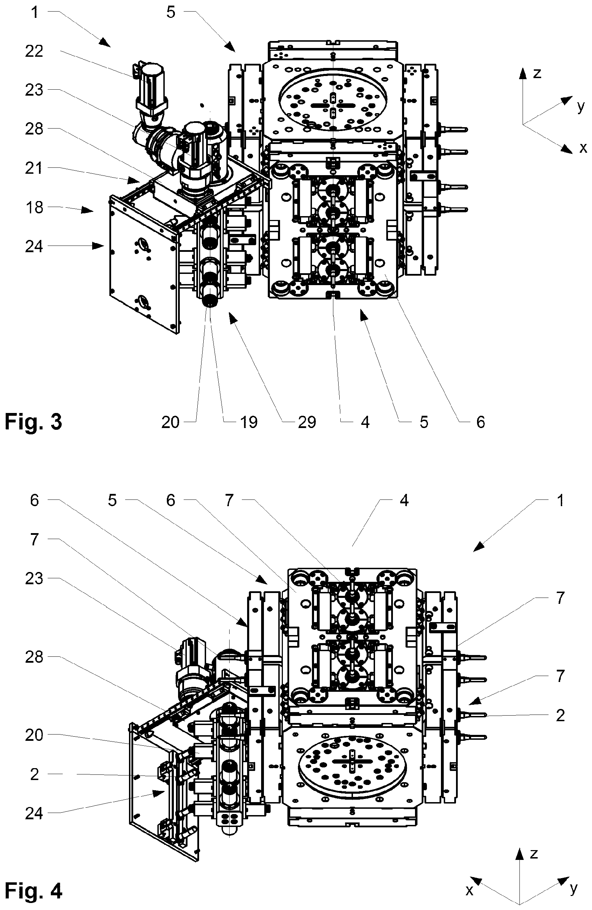

In den **Figuren 3** und **4** ist die Vorrichtung 1 gemäss den **Figuren 1** und 2 ohne die Spritzgiessmaschine dargestellt. Von der Spritzgiessform ist nur der drehbare Mittelteil 5 zu erkennen. Von der Transfervorrichtung 16 sind die Linearführungsmittel 21, die Greifer 24, sowie die Basis 28 und das Speichermittel 29 zu erkennen. Sowohl der Mittelteil 5 als auch das Speichermittel 29 sind in einer Zwischenposition dargestellt (um ihre jeweiligen Drehachsen 4, 19 um 45° gedreht).

Im Betrieb pendelt die Transfervorrichtung 16 zwischen der ihr jeweils zugewendeten Seitenfläche 6 des Mittelteils 5 und den Greifern 24 hin und her. Dabei dreht sich das Speichermittel 29, welches zur temporären Aufnahme und Speicherung der ersten Kunststoffteile 2 dient getaktet um die zweite Drehachse 19. Die Haltemittel 20 werden durch Verschieben der Basis 28 entlang der Linearführungsmittel 21 soweit verschoben, bis sie die Kunststoffteile 2 aus den Kavitäten 7 entnehmen können. Zu diesem Zweck sind die Haltemittel 20 den Kavitäten entsprechend angeordnet. Bei Bedarf können die Haltemittel 20 auch relativ zueinander beweglich angeordnet sein.

**Figur 5** zeigt ein Haltemittel 20 in einer Schnittdarstellung, so dass das Innenleben besser ersichtlich wird. Die versteckten Linien sind gestrichelt dargestellt, so dass der Aufbau besser ersichtlich wird. Der Hohlraum 25 ist der Aussenkontur des Kunststoffteils 2 angepasst. Am Grund des Hohlraumes 25 ist eine Öffnung 26 zu erkennen, mittels welcher ein Vakuum angelegt werden kann, damit die Kunststoffteile 2 sicher und schonend im Innern des Hohlraumes 25 des Haltemittels 20 gehalten werden können. Durch Anlegen eines Überdrucks können die Kunststoffteile 2 aus dem Hohlraum 25 ausgestossen werden. Je nach Anwendungsgebiet und Ausgestaltung können die Haltemittel 20 eine andere Ausgestaltung aufweisen. Alternativ oder in Ergänzung kann die Haltekraft über Reibschluss erzeugt werden, z.B. in dem im Innern des Hohlraumes 25 ein den Reibschluss erhöhendes Element vorgesehen ist. Gute Resultate können mit in einer Nut eingelassenen Dichtungselementen erreicht werden. Allerdings ist zu beachten, dass diese Art der Krafterzeugung nur bei bereits in einem gewissen Mass ausgehärteten Kunststoffteilen möglich ist. Bei Kunststoffteilen, welche noch nicht ausreichend ausgehärtet sind, kann dies auf der Oberfläche zu Beschädigungen führen. Wie ersichtlich ist, weist das Haltemittel 20 einen hier wendeiförmigen, doppelläufigen Kühlkanal 33 auf, welcher durch zwei Öffnungen 34 im Bereich des Sockels des Haltemittels 20 mit Kühlflüssigkeit versorgt werden. In der gezeigten Ausführungsform weist das Haltemittel ein inneres und ein äusseres Gehäuse 30, 31 auf, welche koaxial übereinander geschoben und mittels Dichtungen 32 gegeneinander abgedichtet sind. Zwischen den beiden Gehäusen 30, 31 ist der Kühlkanal 27 angeordnet.

**Bezugszeichen**

| | | | |
|---|---|---|---|
| 1 | Spritzgiessvorrichtung | 18 | Transfermodul |
| 2 | Kunststoffteil | 19 | zweite Drehachse |
| 3 | Spritzgiessform | 20 | Haltemittel |
| 4 | erste Drehachse (Mittelteil) | 21 | Linearführungsmittel |
| 5 | Mittelteil | 22 | erste Antrieb |
| 6 | Seitenflächen | 23 | zweiter Antrieb |
| 7 | Kavität | 24 | Greifer |
| 8 | Koordinationsmittel | 25 | Hohlraum (Haltemittel) |
| 9 | Formaufspannplatte | 26 | Öffnung (Hohlraum) |
| 10 | Haltevorrichtung | 27 | Kühlkanal |
| 11 | untere Traverse | 28 | Basis (Transfermodul) |
| 12 | obere Traverse | 29 | Speichermittel (Transfermodul) |
| 13 | Holmen | 30 | Inneres Gehäuse (Haltemittel) |
| 14 | Untere Dreheinheit | 31 | Äusseres Gehäuse (Haltemittel) |
| 15 | Obere Dreheinheit | 32 | Dichtungsmittel |
| 16 | Transfervorrichtung | 33 | Kühlkanal |
| 17 | Stativ | 34 | Öffnungen |

## Patentansprüche

1. Spritzgiessvorrichtung (1) zur Herstellung von Kunststoffteilen (2) aus einer oder mehreren Materialkomponenten mit
**a.** einer Spritzgiessform (3) mit einem um eine erste Drehachse (4) drehbaren Mittelteil (5), welches zwischen einer ersten und einer zweiten Formhälfte angeordnet und relativ zu diesen in einer ersten Richtung verschiebbar ist und zumindest ein Paar bezüglich der ersten Drehachse (4) des Mittelteils (5) einander gegenüberliegende Seitenflächen (6) aufweist, welche in einer Schliessstellung mit der ersten und der zweiten Formhälfte Kavitäten (7) bilden;
**b.** einer Haltevorrichtung (10) welche zur Halterung des Mittelteils (5) gegenüber der ersten und der zweiten Formhälfte dient, sowie
**c.** einer Transfervorrichtung (16), welche zumindest in einer Offenstellung seitlich neben dem Mittelteil (5) angeordnet ist und zur Übernahme von an einer in dieser Position zugewendeten Seitenfläche (6) des Mittelteils (5) haftenden Kunststoffteilen (2) dient;
**d.** wobei die Transfervorrichtung (16) an der Haltevorrichtung (10) des Mittelteils (5) befestigt ist und eine bezüglich der Haltevorrichtung (10) verschiebbare Basis (28), sowie ein gegenüber der Basis (28) um eine zweite Achse drehbares Speichermittel (29) umfasst, welches zur temporären Übernahme und Speicherung von Kunststoffteilen (2) aus Kavitäten (7) des Mittelteils (5) dient und auf dem Umfang des Speichermittels (29) verteilt angeordnete Haltemittel (20) aufweist.

2. Spritzgiessvorrichtung (1) gemäss Patentanspruch 1, **dadurch gekennzeichnet, dass** die Transfervorrichtung (16) über ein Stativ (17) an der Haltevorrichtung (10) des Mittelteils (5) befestigt ist.

3. Spritzgiessvorrichtung (1) gemäss Patentanspruch 2, **dadurch gekennzeichnet, dass** die Transfervorrichtung (16) an einer oberen Traverse (12) der Haltevorrichtung (10) des Mittelteils (5) befestigt ist.

4. Spritzgiessvorrichtung (1) gemäss einem der vorangehenden Patentansprüche, **dadurch gekennzeichnet, dass** die Anordnung der Haltemittel (20) der Anordnung der Kavitäten (7) einer Seitenfläche (6) des Mittelteils (5) entspricht.

5. Spritzgiessvorrichtung (1) gemäss einem der vorangehenden Patentansprüche, **dadurch gekennzeichnet, dass** das Speichermittel (29) unterhalb der Basis (28) hängend angeordnet ist.

6. Spritzgiessvorrichtung (1) gemäss einem der vorangehenden Patentansprüche, **dadurch gekennzeichnet, dass** das Speichermittel (29) glockenförmige Haltemittel (20) umfasst, welche zur Aufnahmeder Kunststoffteile (2) dienen.

7. Spritzgiessvorrichtung gemäss Patentanspruch 6, **dadurch gekennzeichnet, dass** die Haltemittel (20) eine Öffnung (34) zum Anlegen eines Unterdrucks und/oder eines Überdrucks aufweisen.

8. Spritzgiessvorrichtung (1) gemäss einem der vorangehenden Patentansprüche, **dadurch gekennzeichnet, dass** auf der dem Mittelteil (5) gegenüberliegenden Seite des Speichermittels (29) Greifer (24) angeordnet sind, welche zum Ergreifen von am Speichermittel (29) haftenden Kunststoffteilen (2) geeignet sind.

9. Spritzgiessvorrichtung (1) gemäss Patentanspruch 8, **dadurch gekennzeichnet, dass** die Greifer (24) am Stativ (17) befestigt sind.

10. Spritzgiessvorrichtung (1) gemäss Patentanspruch 8, **dadurch gekennzeichnet, dass** die Greifer (24) zum Auswerfen der Kunststoffteile (2) aus der Spritzgiessvorrichtung (1) dienen.

11. Spritzgiessvorrichtung (1) gemäss einem der vorangehenden Patentansprüche, **dadurch gekennzeichnet, dass** im Bereich der Haltemittel (20) Sensoren angeordnet sind, welche zur Überprüfung der Kunststoffteile (2) dienen.

## Claims

1. Injection moulding device (1) for producing plastics parts (2) from one or more material components, comprising:
**a**. an injection mould (3) with a centre part (5), which can be rotated about a first axis of rotation (4), is arranged between a first and a second mould half, can be displaced relative to said mould halves in a first direction, and comprises at least a pair of lateral surfaces (6), which are arranged opposite one another with respect to the first axis of rotation (4) of the centre part (5) , and in a closed position with the first and second mould halves form cavities (7);
**b**. a retaining device (10), which serves to retain the centre part (5) with respect to the first and the second mould half, and also
**c**. a transfer device (16), which at least in an open position is arranged laterally next to the centre part (5) and serves to transfer plastics parts (2) adhering to a lateral surface (6) of the centre part (5) that is turned in this position;
**d**. wherein the transfer device (16) is fastened to the retaining device (10) of the centre part (5) and includes a base (28), which can be displaced with respect to the retaining device (10), and a storage means (29), which can be rotated about a second axis, serves to temporarily transfer and store plastic parts (2) from cavities (7) of the centre part (5) and comprises retaining means (20) arranged distributed on the perimeter of the storage means (29).

2. Injection moulding device (1) according to Patent Claim 1, **characterized in that** the transfer device (16) is fastened to the retaining device (10) of the centre part (5) via a stand (17).

3. Injection moulding device (1) according to Patent Claim 2, **characterized in that** the transfer device (16) is fastened to an upper crossmember (12) of the retaining device (10) of the centre part (5).

4. Injection moulding device (1) according to one of the preceding patent claims, **characterized in that** the arrangement of the retaining means (20) corresponds to the arrangement of the cavities (7) of a lateral surface (6) of the centre part (5).

5. Injection moulding device (1) according to one of the preceding patent claims, **characterized in that** the storage means (29) is arranged suspended below the base (28).

6. Injection moulding device (1) according to one of the preceding patent claims, **characterized in that** the storage means (29) includes bell-shaped retaining means (20), which serve to hold the plastics parts (2) .

7. Injection moulding device (1) according to Patent Claim 6, **characterized in that** the retaining means (20) comprise an opening (34) for applying a negative pressure and/or an excess pressure.

8. Injection moulding device (1) according to one of the preceding patent claims, **characterized in that** grippers (24), which are suitable for gripping plastics parts (2) adhering to the storage means (29), are arranged on that side of the storage means (29) which is situated opposite the centre part (5).

9. Injection moulding device (1) according to Patent Claim 8, **characterized in that** the grippers (24) are fastened to the stand (17).

10. Injection moulding device (1) according to Patent Claim 8, **characterized in that** the grippers (24) serve to eject the plastics parts (2) from the injection moulding device (1).

11. Injection moulding device (1) according to one of the preceding patent claims, **characterized in that** sensors, which serve to check the plastics parts (2), are arranged in the region of the retaining means (20) .

## Revendications

1. Dispositif de moulage par injection (1) pour la fabrication de pièces en matière plastique (2), constitué d'un ou plusieurs composants matériels comprenant
**a**. un moule de moulage par injection (3) avec une partie médiane (5) rotative autour d'un premier axe de rotation (4), qui est agencée entre une première et une deuxième moitié de moule et au moins déplacée par rapport à celles-ci dans une première direction, et comprend au moins une paire de surfaces latérales (6) opposées l'une à l'autre au regard du premier axe de rotation (4) de la partie médiane (5), qui forment des cavités (7) dans une position de fermeture avec la première et la deuxième moitié de moule ;
**b**. un dispositif de maintien (10), qui sert à maintenir la partie médiane (5) par rapport à la première et deuxième moitié de moule, et
**c**. un dispositif de transfert (16), qui est agencé latéralement à côté de la partie médiane (5) au moins dans une position d'ouverture et sert à transférer des pièces en matière plastique (2) adhérant à une surface latérale (6) de la partie médiane (5) tournée dans cette position ;
**d**. le dispositif de transfert (16) étant fixé au dispositif de maintien (10) de la partie médiane (5), et comportant une base (28) pouvant être déplacée au regard du dispositif de maintien (10), ainsi qu'un moyen de stockage (29) rotatif par rapport à la base (28) autour d'un deuxième axe, qui sert au transfert et stockage temporaire de pièces en matière plastique (2) issues de cavités (7) de la partie médiane (5) et comprend des moyens de maintien (20) répartis sur la périphérie du moyen de stockage (29).

2. Dispositif de moulage par injection (1) selon la revendication 1, **caractérisé en ce que** le dispositif de transfert (16) est fixé au dispositif de maintien (10) de la partie médiane (5) par l'intermédiaire d'un statif (17) .

3. Dispositif de moulage par injection (1) selon la revendication 2, **caractérisé en ce que** le dispositif de transfert (16) est fixé à une traverse supérieure (12) du dispositif de maintien (10) de la partie médiane (5).

4. Dispositif de moulage par injection (1) selon l'une quelconque des revendications précédentes, **caractérisé en ce que** l'agencement des moyens de maintien (20) correspond à l'agencement des cavités (7) d'une surface latérale (6) de la partie médiane (5).

5. Dispositif de moulage par injection (1) selon l'une quelconque des revendications précédentes, **caractérisé en ce que** le moyen de stockage (29) est suspendu sous la base (28).

6. Dispositif de moulage par injection (1) selon l'une quelconque des revendications précédentes, **caractérisé en ce que** le moyen de stockage (29) comporte des moyens de maintien (20) en forme de cloche, qui servent à recevoir les pièces en matière plastique (2).

7. Dispositif de moulage par injection selon la revendication 6, **caractérisé en ce que** les moyens de maintien (20) comprennent une ouverture (34) pour l'application d'une sous-pression et/ou d'une surpression.

8. Dispositif de moulage par injection (1) selon l'une quelconque des revendications précédentes, **caractérisé en ce que** des manipulateurs (24) sont agencés sur le côté du moyen de stockage (29) opposé à la partie médiane (5), qui sont appropriés pour saisir des pièces en matière plastique (2) adhérant sur le moyen de stockage (29).

9. Dispositif de moulage par injection (1) selon la revendication 8, **caractérisé en ce que** les manipulateurs (24) sont fixés sur le statif (17).

10. Dispositif de moulage par injection (1) selon la revendication 8, **caractérisé en ce que** les manipulateurs (24) servent à éjecter les pièces en matière plastique (2) du dispositif de moulage par injection (1).

11. Dispositif de moulage par injection (1) selon l'une quelconque des revendications précédentes, **caractérisé en ce que** des capteurs sont agencés dans la zone des moyens de maintien (20), qui servent à contrôler les pièces en matière plastique (2).
